# DEMANDE DE BREVET EUROPEEN

(11) **EP 0 669 544 A1**
(43) Date de publication de la demande: **30.08.1995**
(21) Numéro de dépôt: 95400313.3
(22) Date de dépôt: 15.02.1995
(51) Int. Cl.: G02B 6/44

(54) **Tête de câble optique**

(30) Priorité: 23.02.1994 FR 9402028
(71) Demandeur: SOCIETE HENRI POUYET, F-94200 Ivry Sur Seine (FR)
(72) Inventeur: Dillat, Michel, F-92400 Courbevoie (FR)
(74) Mandataire: Loyer, Bertrand

(57) **Abrégé**

Tête de câble optique du type comportant un dispositif d'amarrage dudit câble optique, des moyens de lovage des fibres optiques composant ledit câble optique et des connecteurs.

La tête se compose d'un support unique comportant deux zones (1, 2) formant entre elles un angle :
- une zone (1) de répartition et de connexion dans laquelle sont disposés les connecteurs,
- une zone (2) d'amarrage et de lovage dans laquelle sont disposés le dispositif d'amarrage et les moyens de lovage des fibres optiques,

un renvoi courbe étant disposé à la jonction entre les deux zones (1, 2), ledit renvoi courbe présentant un rayon de courbure au moins égale à celui des moyens de lovage.

## Description

La présente invention concerne d'une manière générale un dispositif de raccordement d'un câble de transmission de signaux à des équipements électroniques du type de ceux utilisés dans les répartiteurs téléphoniques. Ces dispositifs sont usuellement appelés têtes de câble.

L'invention concerne plus particulièrement une tête de câble destinée à un câble optique constitué d'une pluralité de fibres optiques.

Une tête de câble optique est décrite dans la demande de brevet français N° 2 694 642 déposée par la demanderesse.

Cette tête de câble présente un compartiment dans lequel sont amarrés les câbles de fibres optiques. A la suite de cet amarrage, les câbles sont décommis afin de séparer les fibres optiques le composant. L'on fait ensuite pénétrer individuellement chaque fibre optique dans une cassette de lovage dans laquelle elle est lovée en vue de former une réserve de fibre pouvant être utilisée lors de modifications ultérieures des besoins.

Les cassettes de lovage nécessaires au lovage de chaque fibre du câble optique sont disposées horizontalement les unes au-dessus des autres en appui contre un profilé ou ferme du répartiteur. Ces cassettes sont mobiles en rotation autour d'un axe vertical situé latéralement afin de pouvoir être écartées vers l'avant du répartiteur pour faciliter l'accès aux fibres optiques.

Chaque cassette de lovage porte un connecteur sur lequel est fixée la fibre optique lovée dans la cassette.

De telles têtes de câble optique sont largement utilisées et donnent généralement satisfaction. Cependant, elles présentent notamment l'inconvénient d'occuper, à l'avant des profilés du répartiteur, une place en saillie plus importante que les têtes de câble utilisées pour les câbles en fils de cuivre.

De ce fait, si ces têtes de câble optique sont utilisées en même temps que des têtes de câble en cuivre dans le même répartiteur, l'on obtient un répartiteur présentant une face avant non régulière ce qui rend malaisé l'accès aux têtes de câble en cuivre.

La présente invention tend alors à proposer une tête de câble optique présentant, à l'avant du répartiteur, le même encombrement que les têtes de câble en cuivre.

A cet effet, l'invention propose une tête de câble optique du type comportant un dispositif d'amarrage dudit câble optique, des moyens de lovage des fibres optiques composant ledit câble optique et des connecteurs, caractérisée en ce qu'elle se compose d'un support unique comportant deux zones formant entre elles un angle :
- une zone de répartition et de connexion dans laquelle sont disposés les connecteurs,
- une zone d'amarrage et de lovage dans laquelle sont disposés le dispositif d'amarrage du câble optique et les moyens de lovage des fibres optiques,

un renvoi courbe étant disposé à la jonction entre les deux zones, ledit renvoi courbe présentant un rayon de courbure au moins égal à celui des moyens de lovage.

L'invention sera mieux comprise grâce à la description qui va suivre donnée à titre d'exemple non limitatif en référence aux dessins annexés dans lesquels :
- la figure 1 est une vue en perspective d'une tête de câble optique selon l'invention positionnée contre un profilé de répartiteur,
- la figure 2 est une vue de face partielle, avec arrachement, de la tête de câble optique suivant l'invention,
- la figure 3 est une vue semblable à la figure 1 montrant l'intérieur de la tête de câble suivant l'invention,
- la figure 4 montre la juxtaposition de deux têtes de câble suivant l'invention sur un profilé de répartiteur,
- la figure 5 est une vue de côté de la tête de câble suivant l'invention,
- la figure 6 est une vue de dessus de la tête de câble suivant l'invention,
- la figure 7 est une vue semblable à la figure 6 pour une variante de réalisation de la tête de câble suivant l'invention.

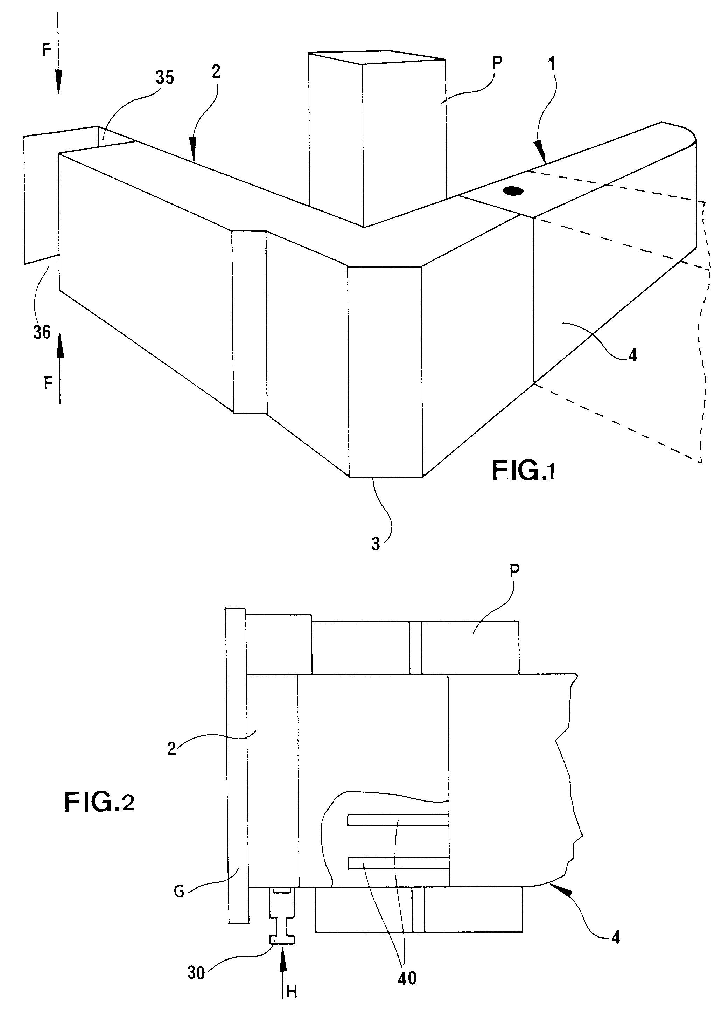

La figure 1 représente la tête de câble optique suivant l'invention montée sur un profilé P d'un répartiteur.

Comme visible sur cette figure, la tête de câble suivant l'invention se présente sous la forme d'un support unique comportant une zone avant 1, ou zone de répartition et de connexion, se disposant suivant la face avant du répartiteur et une zone latérale 2, ou zone d'amarrage et de lovage. Ces zones sont disposées de manière à former un angle entre elles. Dans l'exemple représenté, lesdites zones s'étendent à angle droit l'une par rapport à l'autre.

La tête de câble suivant l'invention se compose d'un corps 3 formant la zone latérale ou d'amarrage et une partie de la zone avant ou de répartition, et d'un moyen de protection des connecteurs ou protecteur 4.

Ce protecteur 4 est monté pivotant par rapport au corps 3 afin de pouvoir être amené vers une position ouverte telle que celle représentée en pointillé sur la figure 1.

De manière connue en soi, le câble optique destiné à être pris en charge dans la tête de câble arrive verticalement à l'arrière de la zone latérale 2 suivant l'une ou l'autre des flèches F. Il pénètre dans le corps 3 par l'ouverture 35 s'il arrive par le haut et par l'ouverture 36 s'il arrive par le bas.

Sur la figure 2, l'on voit que la zone latérale 2 est dimensionnée de manière à s'insérer dans l'espace disponible entre le profilé P du répartiteur et le bord G de la goulotte bordant ce profilé.

L'extrémité du dispositif 30 assurant l'amarrage du câble optique dans la tête de câble est visible à cette figure. Dans cette disposition, le câble optique arrive par le bas du dessin suivant la flèche H.

Le dispositif d'amarrage représenté sur les dessins est celui faisant l'objet de la demande de brevet français FR 2 682 775 déposée par la demanderesse. Tout autre dispositif pourrait bien entendu être utilisé sans sortir du cadre de la présente invention.

L'on a également fait figurer sur cette figure deux des connecteurs destinés au positionnement des fibres optiques.

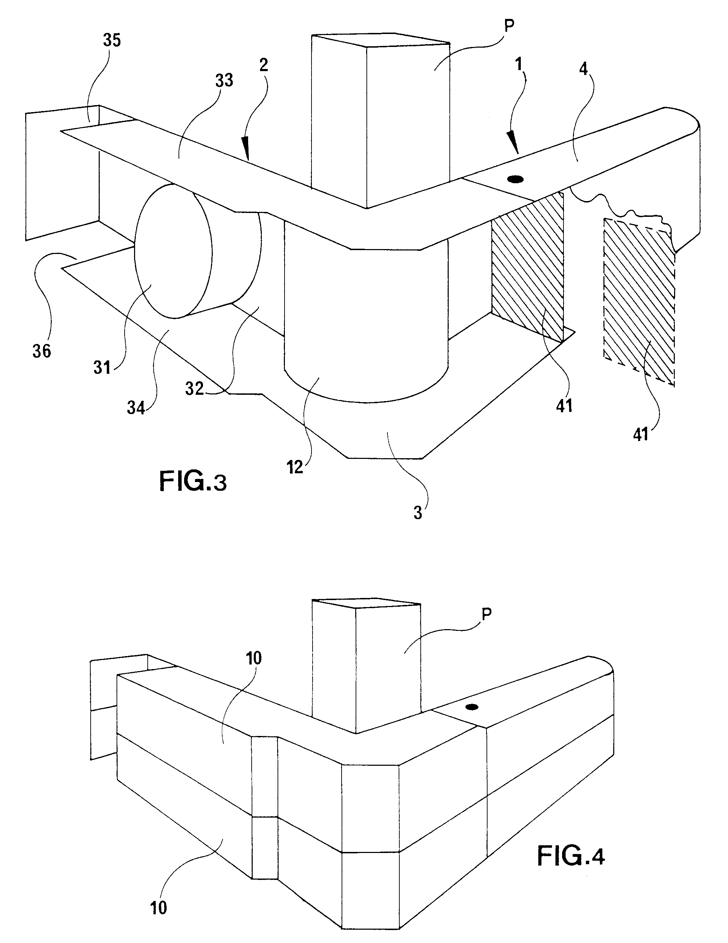

L'agencement interne de la tête de câble suivant l'invention va maintenant être décrit en liaison avec la figure 3.

Comme visible sur cette figure le corps 3 a une section en U et est composé d'une paroi arrière ou fond 32 et de deux parois latérales, l'une supérieure 33 et l'autre inférieure 34 dans lesquelles sont pratiquées les ouvertures 35 et 36 d'arrivée du câble optique.

A la différence des moyens de lovage utilisés dans les têtes de câble optique connues, les moyens de lovage mis en oeuvre dans la tête de câble suivant l'invention sont constitués d'un tambour unique sur lequel sont lovées toutes les fibres optiques destinées à être connectées dans la zone avant.

Ce tambour 31 de lovage est fixé au fond 32 dans sa partie s'étendant dans la zone latérale 2. Ce tambour 31 est cylindrique et a son axe disposé perpendiculairement audit fond 32, c'est-à-dire horizontal. Ce tambour est destiné au lovage, après qu'elles aient été décommises, des fibres optiques composant le câble optique pénétrant dans la tête de câble.

Le fait de positionner suivant l'invention ce tambour de lovage dans la zone latérale disposé à angle droit vers l'arrière permet de réduire l'encombrement de la partie avant de la tête de câble se trouvant sur la face avant du répartiteur.

De manière connue en soi, ce tambour a un rayon de l'ordre de 40 millimètres afin de respecter les normes actuellement imposées en France. Ce rayon peut bien entendu être différent afin d'être adapté aux caractéristiques des fibres optiques utilisées, il doit être tel qu'il ne perturbe pas sensiblement la propagation des signaux dans les fibres.

L'encombrement en largeur de la zone latérale est peu important du fait du positionnement de ce tambour avec son axe horizontal.

Le corps 3 renferme également un renvoi courbe 12 disposé à la jonction entre la zone avant 1 et la zone latérale 2.

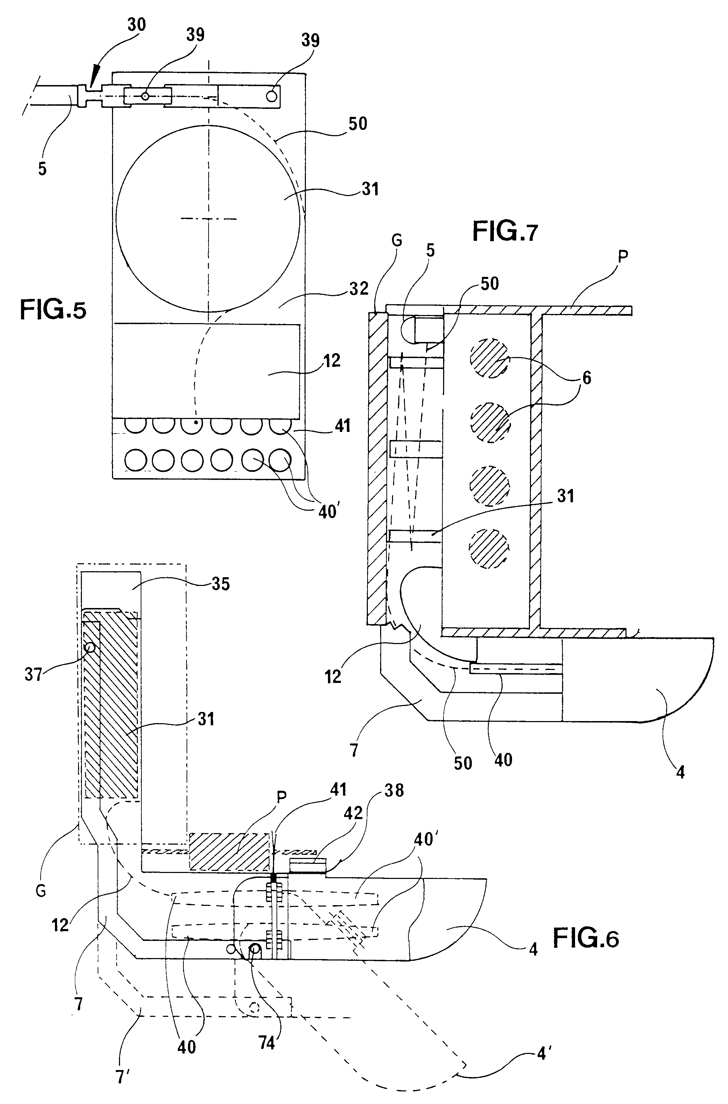

Ce renvoi courbe mieux visible sur les figures 6 et 7 a une forme arrondie de manière à assurer le guidage des fibres optiques le long du changement de direction entre la zone latérale 2 et la zone avant 1. Ce renvoi courbe a un rayon au moins égale à celui du tambour de lovage afin de ne pas perturber la propagation des signaux dans les fibres optiques.

A son extrémité opposée à la zone latérale, le corps 3 porte une plaque 41 supportant les connecteurs 40. Cette plaque 41 est disposée verticalement et perpendiculairement au fond 32.

Comme représenté en pointillés à la figure 3, cette plaque 41 peut être montée mobile dans le corps 3, par exemple au moyen de rails non représentés, de manière à pouvoir être retirée en vue de faciliter le montage des connecteurs 40.

Les différents éléments décrits ci-dessus sont représentés avec plus de détails aux figures 5 à 7.

Sur la figure 5 l'on voit le dispositif d'amarrage 30 par lequel le câble 5 arrivant par le bas est maintenu sur la tête de câble suivant l'invention de manière telle que les fibres 50 ne subissent pas de contraintes dues à des déplacements dudit câble 5 à l'extérieur de ladite tête de câble.

Ce dispositif d'amarrage 30 est positionné verticalement sur le fond 32 et fixé en deux points 39.

Dans le cas où le câble optique arrive dans la tête de câble par le haut, le dispositif d'amarrage 30 est retourné en inversant sa position par rapport auxdits points 39.

L'on a représenté en pointillé l'une des fibres 50 constituant le câble 5.

Cette fibre 50 est lovée autour du tambour 31. Après avoir tourné autour dudit tambour 31, cette fibre 50 passe devant le renvoi courbe 12 pour pénétrer dans la zone avant où elle est fixée dans l'un des connecteurs 40 monté sur la plaque 41.

Ladite fibre peut être utilisée dans la tête de câble soit nue, soit gainée jusqu'à sa fixation dans le connecteur 40.

Dans l'exemple représenté, la plaque 41 porte 12 connecteurs 40 disposés en deux rangées verticales parallèles de 6 connecteurs.

Lorsque le câble 5 comporte plus de 12 fibres optiques 50, l'on peut positionner plusieurs têtes de câble suivant l'invention les unes au-dessus des autres sur le profilé P du répartiteur. La figure 4 montre la disposition de deux têtes de câble 10 contre un profilé P. Il est également possible de concevoir une tête de câble plus haute permettant la mise en place d'une plaque portant le nombre nécessaire de connecteurs en prenant garde de ne pas augmenter la dimension en saillie de la tête de câble.

A la figure 6, la tête de câble suivant l'invention est montée sur un profilé P de forme différente et l'on a représenté en trait mixte l'encombrement de la goulotte.

L'on a représenté sur cette figure les secondes parties 40' des connecteurs auxquelles sont fixées les fibres transmettant les informations en direction des utilisateurs.

L'on voit sur cette figure qu'un capot 7 est prévu pour fermer le corps 3 et protéger ainsi les fibres optiques qu'il renferme. Ce capot 7 a, dans l'exemple représenté une section en U afin de se positionner parallèlement au fond 32 du corps 3, avec ses petits côtés contre l'extérieur dudit corps 3. Le capot 7 est par exemple fixé par encliquetage sur ledit corps 3 au moyen d'ergots 37.

Dans l'exemple de réalisation représenté au dessin, le protecteur 4 est porté par le capot 7 en étant mobile en rotation autour d'un axe 74.

Lors de l'installation du câble 5 dans la tête de câble, le capot 7 et le protecteur 4 sont retirés comme montré par les pointillés 7' afin de laisser libre accès à l'intérieur de la tête de câble.

Lorsqu'il est nécessaire, après la réalisation du câblage, de faire des modifications ou d'effectuer des tests ne nécessitant d'avoir accès qu'aux secondes parties 40' des connecteurs, l'on fait pivoter le protecteur 4 comme représenté en pointillés en 4', la rotation se poursuivant au-delà de cette position 4' de manière à totalement découvrir les connecteurs.

Comme représenté sur cette figure l'on peut prévoir de maintenir le protecteur 4 en position de fermeture par des pattes d'encliquetage 42 destinées à s'encliqueter sur des prolongements 38 du corps 3.

La tête de câble suivant l'invention représentée à la figure 7 est de forme un peu différente de celle représentée aux figures précédentes. Elle est montrée positionnée sur un profilé P à section en I. L'on voit en 6 des câbles passant le long dudit profilé et destinés à être montés dans d'autres têtes de câbles situées au-dessus ou en-dessous de la tête de câble représentée.

Grâce à la conception de la tête de câble optique suivant l'invention, définissant une zone de connexion destinée à être disposée à l'avant du répartiteur et une zone d'amarrage et de lovage destinée à être positionnée vers l'arrière, l'on limite l'encombrement en saillie de celle-ci à l'avant des profilés de répartiteur à l'encombrement usuel des tête de câble en cuivre, soit environ 45 millimètres.

La tête de câble suivant l'invention peut être réalisée de manière aisée par moulage de matière plastique.

Il alors est possible de réaliser le tambour et le renvoi courbe d'une seule pièce avec le corps 3.

Le protecteur 4 peut de manière avantageuse être réalisé dans une matière transparente afin de permettre des vérifications rapides des câblages ne nécessitant pas l'ouverture de celui-ci.

## Revendications

**1. -** Tête de câble optique du type comportant un dispositif d'amarrage dudit câble optique, des moyens de lovage des fibres optiques composant ledit câble optique et des connecteurs, caractérisée en ce qu'elle se compose d'un support unique comportant deux zones (1, 2) formant entre elles un angle :
- une zone (1) de répartition et de connexion dans laquelle sont disposés les connecteurs (40),
- une zone (2) d'amarrage et de lovage dans laquelle sont disposés le dispositif d'amarrage (30) du câble optique et les moyens de lovage des fibres optiques,
un renvoi courbe (12) étant disposé à la jonction entre les deux zones (1, 2), ledit renvoi courbe présentant un rayon de courbure au moins égal à celui des moyens de lovage.

**2. -** Tête de câble selon la revendication 1, caractérisée en ce que les moyens de lovage sont constitués par un tambour (31) de lovage des fibres optiques, disposé avec son axe horizontal.

**3. -** Tête de câble selon la revendication 1 ou la revendication 2, caractérisée en ce que la zone de répartition et de connexion (1) comporte une plaque (41) disposée verticalement et supportant les connecteurs (40).

**4. -** Tête de câble selon la revendication 3, caractérisée en ce que ladite plaque (41) est montée mobile dans la zone de répartition (1).

**5.** Tête de câble selon l'une quelconque des revendications précédentes, caractérisée en ce qu'elle se compose d'un corps (3) formant la zone d'amarrage (2) et la zone du compartiment de répartition (1), et d'un protecteur (4).

**6. -** Tête de câble selon la revendication 5, caractérisée en ce que le protecteur (4) est monté pivotant par rapport au corps (3).

**7. -** Tête de câble selon la revendication 5 ou la revendication 6, caractérisée en ce qu'un capot (7) ferme le corps (3) pour protéger les fibres optiques qu'il renferme.

**8. -** Tête de câble selon la revendication 7, caractérisée en ce que le protecteur (4) est porté par le capot (7) en étant mobile en rotation autour d'un axe (74).
